# EUROPEAN PATENT SPECIFICATION

(11) **EP 3 263 315 B1**
(45) Date of publication and mention of the grant of the patent: **23.09.2020**
(21) Application number: 17179214.6
(22) Date of filing: 30.06.2017
(51) Int. Cl.: B29C 64/153, B29C 64/35, B33Y 30/00, B33Y 40/00

(54) **LASER 3D PRINTER**
LASER-3D-DRUCKER
IMPRIMANTE 3D LASER

(30) Priority: 01.07.2016 IT 201600068807
(43) Date of publication of application: 03.01.2018
(73) Proprietor: 3D4MEC SRL, 40037 Sasso Marconi (IT)
(72) Inventor: CORSINI, Giuseppe, 40037 SASSO MARCONI (IT); CARLONI, Gabriele, 40131 BOLOGNA (IT)
(74) Representative: Manconi, Stefano

(56) References cited:
- WO-A1-2005/025780
- WO-A1-2016/133456
- US-A1- 2001 045 678

## Description

The present invention relates to a laser 3D printer.

In particular, the present invention relates to a laser 3D printer of the type comprising a tubular compartment having a substantially vertical longitudinal axis; a lifting platform engaged in a sliding manner in the tubular compartment; a feeding unit for feeding a powdered material onto the lifting platform; a laser printing head for sintering the powdered material laid on the lifting platform; and a collection chamber, which extends around at least part of the tubular compartment.

The lifting platform is progressively lowered to enable the feeding unit to feed each time a new layer of powdered material onto the lifting platform at the end of each operating cycle of the laser printing head.

At the end of processing, the lifting platform is raised into a position corresponding to an open top end of the tubular compartment to enable recovery of the article produced.

Raising of the lifting platform at the end of processing involves dispersion of the residual powdered material into the space surrounding the tubular compartment.

Known laser 3D printers of the type described above present some drawbacks mainly resulting from the fact that recovery of the residual powdered material dispersed at the end of processing is performed by the operating staff using a suction device and hence entails the exposure of the staff to the powdered material itself.

WO2005/025780A1 and US2001/045678A1 describe laser 3D printers according to the preamble of claim 1.

The aim of the present invention is to provide a laser 3D printer that will be free from the drawbacks described above and that will be simple and economically advantageous to produce.

According to the present invention a laser 3D printer is provided as specified in the annexed claims.

The present invention will now be described with reference to the annexed drawings, which illustrate a non-limiting example of embodiment thereof and in which:
Figure 1 is a schematic lateral view, with parts in cross-sectional view and parts removed for reasons of clarity, of a preferred embodiment of the laser 3D printer according to the present invention;
Figures 2 and 3 are two schematic lateral views, with parts removed for reasons of clarity, of a first detail of the laser 3D printer of Figure 1 illustrated in two different operative positions;
Figure 4 is a schematic perspective view of a first detail of Figures 2 and 3;
Figure 5 is a schematic plan view, with parts removed for reasons of clarity, of a second detail of Figures 2 and 3;
Figure 6 is a schematic lateral view, with parts removed for reasons of clarity, of a second detail of the laser 3D printer of Figure 1 illustrated in two different operative positions;
Figure 7 is a schematic lateral view, with parts in cross section and parts removed for reasons of clarity, of a detail of Figure 6;
Figure 8 is a schematic perspective view of a third detail of Figures 2 and 3; and
Figure 9 is a schematic perspective view of a fourth detail of Figures 2 and 3.

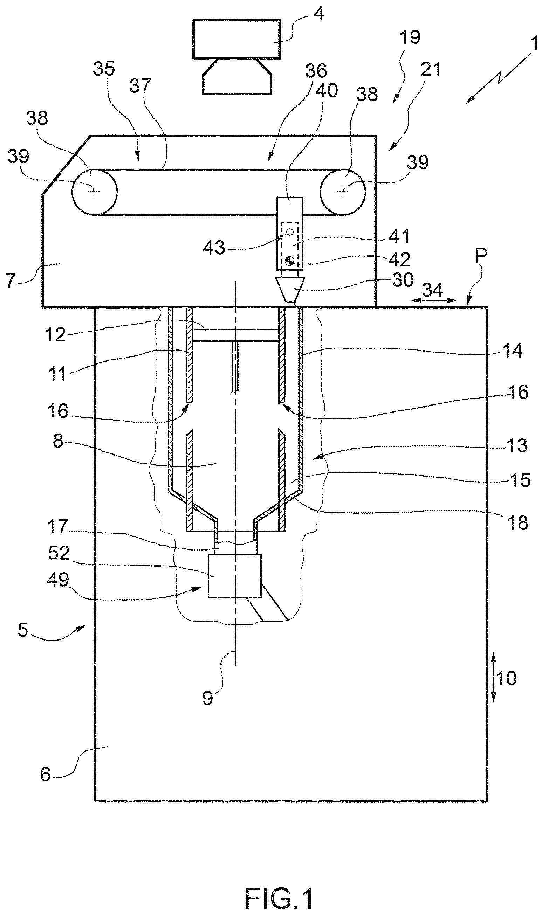

With reference to Figures 1, 2, and 3, designated as a whole by 1 is a laser 3D printer for producing three-dimensional objects 2 by sintering of a powdered material 3 using a laser head 4.

The printer 1 comprises a supporting frame 5, which in turn comprises a bottom box-shaped body 6 and a top box-shaped body 7 connected together along a substantially horizontal plane P of separation.

The body 6 houses within it a tubular compartment 8, which has a longitudinal axis 9 parallel to a substantially vertical direction 10 perpendicular to the plane P, extends downwards starting from the plane P, and has a cross section having a substantially square shape.

The compartment 8 is limited by a side wall 11 engaged in a sliding manner by a lifting platform 12, which extends perpendicular to the direction 10 and is mobile along the compartment 8 in the direction 10 itself under the thrust of a driving device (known and not illustrated).

The platform 12 is connected to a known vibrating device (not illustrated) designed to impart on the platform 12 itself vibrations according to a given law.

The compartment 8 is inserted within a collection chamber 13, which extends downwards starting from the plane P, moreover extends around the wall 11, and is limited by a side wall 14.

The walls 11, 14 define between them an annular channel 15, which communicates with the compartment 8 via a plurality of openings 16, which are made in an intermediate point of the wall 11 and are distributed about the axis 9.

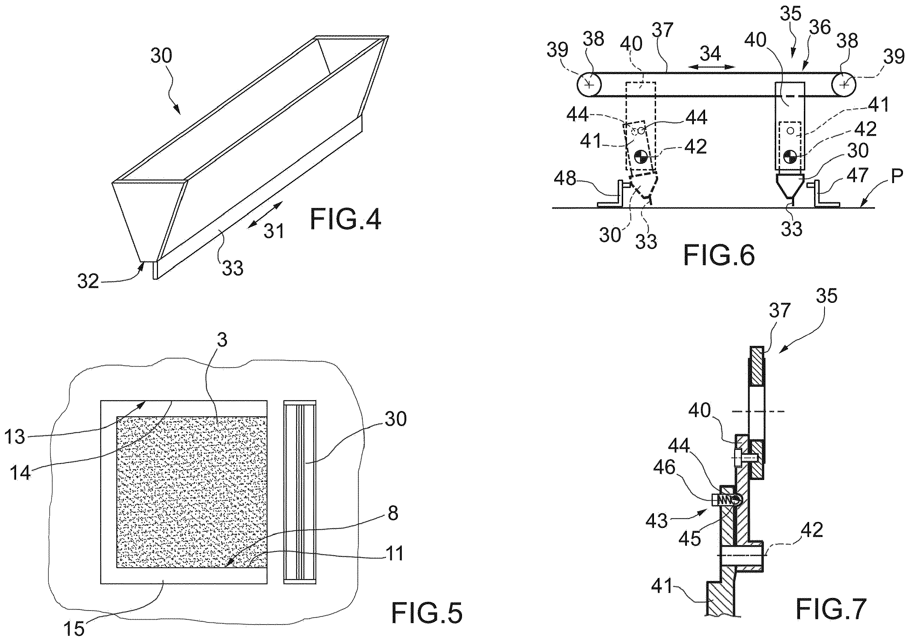

According to what is illustrated in Figure 5, the channel 15 has a substantially U-shaped inlet section, and is closed by the plane P on a fourth side thereof.

The chamber 13 has an outlet 17 for the material 3 from the channel 15 and is limited by a bottom wall 18, which is configured for feeding the material 3 towards the outlet 17 and in particular is inclined downwards.

The printer 1 further comprises a feeding unit 19 for feeding the material 3 onto the platform 12.

The unit 19 comprises a top tank 20 mounted on the body 7, and a dispensing and distribution unit 21 mounted above the plane P and connected to the tank 20 via a vibrating feeding duct 22.

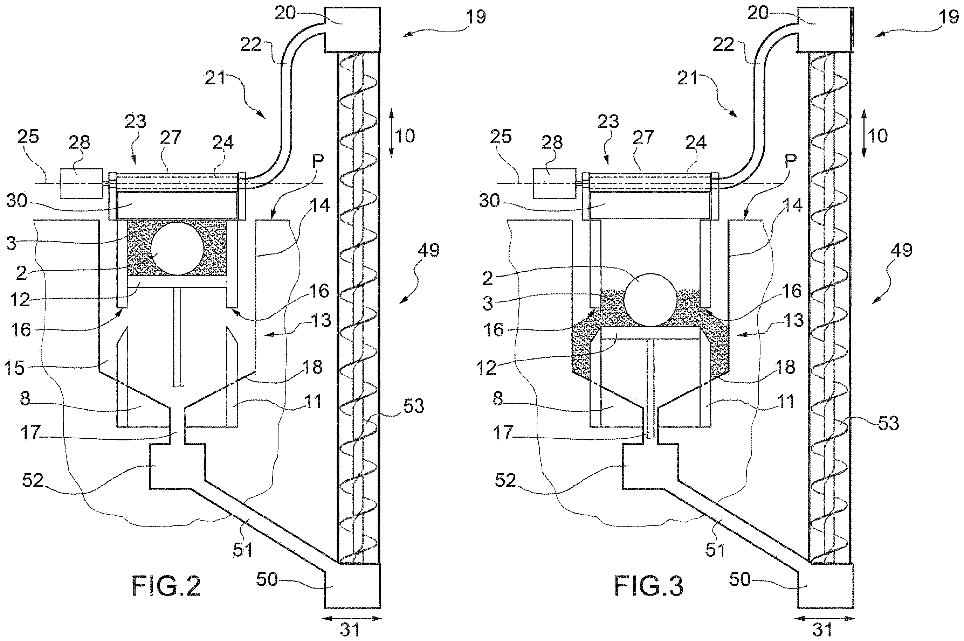

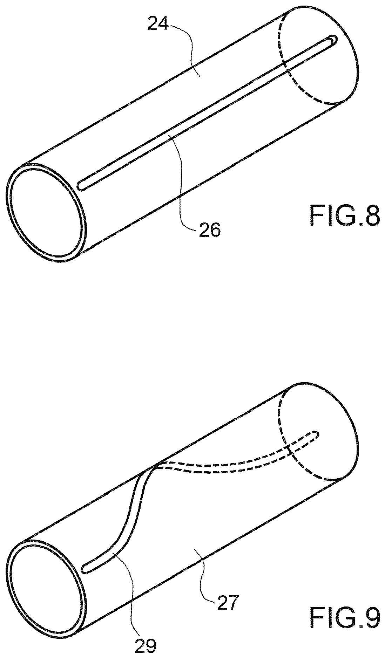

With reference to Figures 2, 3, 8, and 9, the unit 21 comprises a dispensing device 23, in turn comprising a fixed inner pipe 24, which has a longitudinal axis 25 parallel to the plane P and transverse to the direction 10, is coupled in an angularly fixed way to the frame 5, and communicates with the duct 22.

The pipe 24 has a slit 26, which is made through the pipe 24 parallel to the axis 25, and faces the plane P.

The device 23 further comprises a rotating outer pipe 27, which extends around the pipe 24 coaxially thereto about the axis 25 and is coupled in a rotating manner to the pipe 24 for rotating, with respect to the pipe 24 and under the thrust of a driving device 28, about the axis 25 itself.

The pipe 27 has a slit 29, which is made through the pipe 27 and winds in a helix about the axis 25 according to an angle of substantially 180°.

According to what is illustrated in Figures 2, 3, and 4, the unit 21 further comprises a distributor 30, which has the shape of a hopper converging towards the plane P, extends in a direction 31 parallel to the axis 25, and is mounted between the plane P and the dispensing device 23.

The distributor 30 is limited underneath by a plane face 32, and is provided with a spatula 33, which extends in the direction 31, and projects downwards from the face 32 itself.

The distributor 30 is mobile, with respect to the dispensing device 23 and above the compartment 8, in a feeding direction 34 parallel to the plane P and orthogonal to the directions 10 and 31 with a reciprocating rectilinear motion comprising a forward stroke and a return stroke.

In this connection, it should be pointed out that, at the end of the return stroke, the distributor 30 sets itself underneath the dispensing device 23.

The distributor 30 is displaced in the direction 34 by a driving device 35 comprising a belt conveyor 36, in turn comprising a belt 37 wound in a loop about a pair of pulleys 38, one of which is motor-driven in an intermittent way and which are mounted so as to turn about respective rotation axes 39 parallel to one another and to the direction 31.

The device 35 further comprises an engagement plate 40, which is fixed to the belt 37, and carries connected thereto a rocker 41 projecting upwards from the distributor 30.

The rocker 41 is hinged to the plate 40 so as to turn, with respect to the plate 40, about a pivot axis 42 parallel to the direction 31 between a lowered, operating, position (illustrated with a solid line in Figure 6), in which the plane of vertical symmetry of the distributor 30 is perpendicular to the plane P, and a raised, resting, position (illustrated with a dashed line in Figure 6), in which the plane of vertical symmetry of the distributor 30 is inclined with respect to the plane P and the spatula 33 is raised with respect to the plane P itself.

With reference to Figures 6 and 7, the distributor 30 is locked in its operating position and in its resting position by a locking device 43 comprising a pair of slots 44, which are provided in the plate 40 and are circumferentially aligned with respect to one another about the axis 42.

The device 43 further comprises an engagement ball 45, which is mounted in a top arm of the rocker 41 and is displaced into a locking position, in which the ball 45 engages one of the slots 44, and normally kept therein, by a spring 46 set between the rocker 41 and the ball 45 itself.

At the end of the return stroke, the distributor 30 is displaced into its operating position by a first end-of-travel element 47 designed to come into contact with a bottom arm of the rocker 41.

At the end of the forward stroke, the distributor is displaced into its resting position by a second end-of-travel element 48 designed to come into contact with the bottom arm of the rocker 41.

Finally, the printer 1 comprises a device 49 for recycling the material 3 collected in the chamber 13 and fed to the outlet 17.

The device 49 comprises a bottom tank 50 set underneath the outlet 17; a chute 51, which extends between the outlet 17 and the tank 50; a filter 52 mounted at the inlet of the chute 51; and an auger 53 designed to transfer the material 3 from the tank 50 to the tank 20.

Operation of the printer 1 will now be described starting from an instant in which:
the platform 12 is set at a distance from the plane P that is approximately equal to the thickness of a layer of material 3; and
the distributor 30 is set in its operating position underneath the dispensing device 23.

The rotating outer pipe 27 is set in rotation about the axis 25 by the driving device 28 so as to enable the slit 29 to align radially with the slit 26 and define an outlet opening (not illustrated) for the material 3 from the dispensing device 23.

Since the slit 29 winds in a helix about the axis 25 according to an angle substantially equal to 180°, the aforesaid outlet opening (not illustrated) for exit of the material 3 from the device 23 progressively advances along the axis 25 so as to deposit a homogeneous layer of material 3 within the distributor 30.

At the end of a rotation through 180° of the pipe 27 about the axis 25, the slit 29 disengages the slit 26, and the outlet opening (not illustrated) is closed during the next rotation through 180° of the pipe 27 itself.

Once the material 3 has been fed into the distributor 30, the distributor 30 is displaced above the compartment 8 with its forward stroke in the direction 34 so as to distribute the material 3 over the platform 12.

At the end of its forward stroke, the distributor 30 is first displaced into its resting position by the element 48, and is then displaced above the compartment 8 in its return stroke, without interfering with the material 3.

At the end of the return stroke, the distributor 30 is again displaced into its operating position by the element 47.

The above operating cycle of the dispensing and distribution unit 21 is repeated and combined with lowering of the platform 12 so as to create an object 2.

During production of the object 2, the platform 12 is always set above the openings 16.

Once the object 2 is obtained, the platform 12 is lowered below the openings 16 and set in vibration so as to enable the material 3 to exit from the compartment 8, enter the chamber 13, and proceed towards the outlet 17.

The material 3 is fed from the outlet 17 through the filter 52, along the chute 51, and into the tank 50, and is finally again fed into the tank 20 by the auger 53.

The printer 1 consequently presents the advantage that the powdered material 3 is partially used to make the object 2 and partially recirculated in the tank 20 without being dispersed in the environment surrounding the compartment 8 and without requiring recovery operations of the residual material 3 by the operating staff.

## Claims

1. A laser 3D printer comprising a tubular compartment (8), which has a substantially vertical longitudinal axis (9) and is limited by a side wall (14), which extends about the longitudinal axis (9) itself; a lifting platform (12) engaged in a sliding manner in the tubular compartment (8); a feeding unit (19) for feeding a powdered material (3) onto the lifting platform (12); a laser printing head (4) for sintering the powdered material (3) laid on the lifting platform (12); and a collection chamber (13), which extends about the tubular compartment (8), has an outlet (17) for the powdered material (3), and is limited by a bottom wall (18) configured so as to feed the powdered material (3) towards the outlet (17) itself; the tubular compartment (8) having at least one opening (16) made through the side wall (14) for connecting together the tubular compartment (8) and the collection chamber (13); and being **characterized in that** the tubular compartment (8) is inserted within the collection chamber (13) so that the outlet (17) is located beneath the tubular compartment (8).

2. The laser 3D printer according to Claim 1 and further comprising a vibrating device for imparting on the lifting platform (12) vibrations according to a given law.

3. The laser 3D printer according to Claim 1 or Claim 2, wherein the side wall (14) is provided with a plurality of openings (16) distributed about the longitudinal axis (9).

4. The laser 3D printer according to any one of the preceding claims and further comprising a recycling system (49) for recycling the powdered material (3) contained in the collection chamber (13) towards the feeding unit (19).

5. The laser 3D printer according to Claim 4, wherein the feeding unit (19) comprises a dispensing device (23) for feeding the powdered material (3) onto the lifting platform (12), and a top tank (20) set between the recycling system (49) and the dispensing device (23) itself.

6. The laser 3D printer according to Claim 5, wherein the recycling system (49) comprises a feeding device (53) for transferring the powdered material (3) into the top tank (20).

7. The laser 3D printer according to Claim 6, wherein the recycling system (49) further comprises a chute (51) which connects together the collection chamber (13) and the feeding device (53).

8. The laser 3D printer according to Claim 7, wherein the recycling system (49) further comprises a bottom tank (50) mounted between the chute (51) and the feeding device (53).

9. The laser 3D printer according to any one of the preceding claims, wherein the lifting platform (12) is mobile along the tubular compartment (8) between a raised position, in which the lifting platform (12) extends above the opening (16), and a lowered position, in which the lifting platform (12) extends underneath the opening (16) itself.

10. The laser 3D printer according to any one of the preceding claims, wherein each opening (16) is made in an intermediate point of the side wall (14) along the longitudinal axis (9).

## Patentansprüche

1. Laser-3D-Drucker, der Folgendes umfasst: ein röhrenförmiges Fach (8), das eine im Wesentlichen vertikale Längsachse (9) aufweist und von einer Seitenwand (14) begrenzt ist, die sich um die Längsachse (9) selbst erstreckt; eine Hebeplattform (12), die auf eine verschiebbare Art in dem röhrenförmigen Fach (8) in Eingriff ist; eine Zuführungseinheit (19) zum Zuführen eines pulverförmigen Materials (3) auf die Hebeplattform (12); einen Laser-Druckkopf (4) zum Sintern des auf die Hebeplattform (12) gelegten pulverförmigen Materials (3); und eine Sammelkammer (13), die sich um das röhrenförmige Fach (8) erstreckt, einen Auslass (17) für das pulverförmige Material (3) aufweist und von einer unteren Wand (18) begrenzt ist, die so ausgestaltet ist, dass das pulverförmige Material (3) hin zu dem Auslass (17) selbst zugeführt wird; wobei das röhrenförmige Fach (8) mindestens eine Öffnung (16) aufweist, die so durch die Seitenwand (14) hergestellt ist, dass das röhrenförmige Fach (8) und die Sammelkammer (13) miteinander verbunden sind; und **dadurch gekennzeichnet, dass** das röhrenförmige Fach (8) derart innerhalb der Sammelkammer (13) eingesetzt ist, dass der Auslass (17) sich unter dem röhrenförmigen Fach (8) befindet.

2. Laser-3D-Drucker nach Anspruch 1 und ferner umfassend eine Vibrationsvorrichtung, um der Hebeplattform (12) Vibrationen gemäß einem gegebenen Gesetz zu verleihen.

3. Laser-3D-Drucker nach Anspruch 1 oder Anspruch 2, wobei die Seitenwand (14) mit einer Vielzahl von Öffnungen (16) versehen ist, die um die Längsachse (9) verteilt sind.

4. Laser-3D-Drucker nach einem der vorhergehenden Ansprüche und ferner umfassend ein Rückführungssystem (49) zum Rückführen des pulverförmigen Materials (3), das in der Sammelkammer (13) enthalten ist, hin zu der Zuführungseinheit (19).

5. Laser-3D-Drucker nach Anspruch 4, wobei die Zuführungseinheit (19) eine Abgabevorrichtung (23) zum Zuführen des pulverförmigen Materials (3) auf die Hebeplattform (12) und einen oberen Tank (20) umfasst, der zwischen das Rückführungssystem (49) und die Abgabevorrichtung (23) selbst gesetzt ist.

6. Laser-3D-Drucker nach Anspruch 5, wobei das Recyclingsystem (49) eine Zuführungsvorrichtung (53) zum Überführen des pulverförmigen Materials (3) in den oberen Tank (20) umfasst.

7. Laser-3D-Drucker nach Anspruch 6, wobei das Rückführungssystem (49) ferner eine Rutsche (51) umfasst, die die Sammelkammer (13) und die Zuführungsvorrichtung (53) miteinander verbindet.

8. Laser-3D-Drucker nach Anspruch 7, wobei das Rückführungssystem (49) ferner einen unteren Tank (50) umfasst, der zwischen der Rutsche (51) und der Zuführungsvorrichtung (53) montiert ist.

9. Laser-3D-Drucker nach einem der vorhergehenden Ansprüche, wobei die Hebeplattform (12) entlang des röhrenförmigen Fachs (8) zwischen einer angehobenen Position, in der die Hebeplattform (12) sich über der Öffnung (16) erstreckt, und einer abgesenkten Position beweglich ist, in der die Hebeplattform (12) sich unter der Öffnung (16) selbst erstreckt.

10. Laser-3D-Drucker nach einem der vorhergehenden Ansprüche, wobei jede Öffnung (16) in einem Zwischenpunkt der Seitenwand (14) entlang der Längsachse (9) hergestellt ist.

## Revendications

1. Imprimante 3D laser comprenant un compartiment tubulaire (8), lequel présente un axe longitudinal sensiblement vertical (9) et est limité par une paroi latérale (14), laquelle s'étend autour de l'axe longitudinal (9) à proprement dit ; une plateforme de levage (12) engagée d'une manière coulissante dans le compartiment tubulaire (8) ; une unité d'alimentation (19) destinée à fournir un matériau en poudre (3) sur la plateforme de levage (12) ; une tête d'impression laser (4) destinée à fritter le matériau en poudre (3) déposé sur la plateforme de levage (12) ; et une chambre de recueil (13), laquelle s'étend autour du compartiment tubulaire (8), présente une sortie (17) destinée au matériau en poudre (3), et est limitée par une paroi de fond (18) configurée de sorte à amener le matériau en poudre (3) vers la sortie (17) à proprement dite ; le compartiment tubulaire (8) présentant au moins une ouverture (16) ménagée à travers la paroi latérale (14) afin de relier le compartiment tubulaire (8) et la chambre de recueil (13) ; et étant **caractérisée en ce que** le compartiment tubulaire (8) est inséré dans la chambre de recueil (13) de sorte que la sortie (17) est située sous le compartiment tubulaire (8).

2. Imprimante 3D laser selon la revendication 1 et comprenant en outre un dispositif vibrant destiné à appliquer des vibrations sur la plateforme de levage (12) selon une loi donnée.

3. Imprimante 3D laser selon la revendication 1 ou la revendication 2, dans laquelle la paroi latérale (14) est dotée d'une pluralité d'ouvertures (16) réparties autour de l'axe longitudinal (9).

4. Imprimante 3D laser selon l'une quelconque des revendications précédentes et comprenant en outre un système de recyclage (49) destiné à recycler le matériau en poudre (3) contenu dans la chambre de recueil (13) vers l'unité d'alimentation (19).

5. Imprimante 3D laser selon la revendication 4, dans laquelle l'unité d'alimentation (19) comprend un dispositif de distribution (23) destiné à fournir le matériau en poudre (3) sur la plateforme de levage (12), et un réservoir supérieur (20) placé entre le système de recyclage (49) et le dispositif de distribution (23) à proprement dit.

6. Imprimante 3D laser selon la revendication 5, dans laquelle le système de recyclage (49) comprend un dispositif d'alimentation (53) destiné à transférer le matériau en poudre (3) dans le réservoir supérieur (20).

7. Imprimante 3D laser selon la revendication 6, dans laquelle le système de recyclage (49) comprend en outre une goulotte (51) laquelle relie la chambre de recueil (13) et le dispositif d'alimentation (53).

8. Imprimante 3D laser selon la revendication 7, dans laquelle le système de recyclage (49) comprend en outre un réservoir inférieur (50) monté entre la goulotte (51) et le dispositif d'alimentation (53).

9. Imprimante 3D laser selon l'une quelconque des revendications précédentes, dans laquelle la plateforme de levage (12) est mobile le long du compartiment tubulaire (8) entre une position relevée, dans laquelle la plateforme de levage (12) s'étend au-dessus de l'ouverture (16), et une position abaissée, dans laquelle la plateforme de levage (12) s'étend en dessous de l'ouverture (16) à proprement dite.

10. Imprimante 3D laser selon l'une quelconque des revendications précédentes, dans laquelle chaque ouverture (16) est ménagée au niveau d'un point intermédiaire de la paroi latérale (14) le long de l'axe longitudinal (9).
